(19) **Europäisches Patentamt**
**European Patent Office**
**Office européen des brevets**

(11) **EP 2 750 450 A1**

(12) **EUROPEAN PATENT APPLICATION**
published in accordance with Art. 153(4) EPC

(43) Date of publication:
**02.07.2014 Bulletin 2014/27**

(21) Application number: **12825893.6**

(22) Date of filing: **23.07.2012**

(51) Int Cl.:
**H04W 48/06** $^{(2009.01)}$

(86) International application number:
**PCT/JP2012/068626**

(87) International publication number:
**WO 2013/027522 (28.02.2013 Gazette 2013/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.08.2011 JP 2011182541**

(71) Applicant: **NTT Docomo, Inc.**
**Tokyo 100-6150 (JP)**

(72) Inventors:
• **AOYAGI, Kenichiro**
**Tokyo 100-6150 (JP)**

• **IWAMURA, Mikio**
**Tokyo 100-6150 (JP)**
• **OBATA, Kazunori**
**Tokyo 100-6150 (JP)**
• **UCHIYAMA, Tadashi**
**Tokyo 100-6150 (JP)**

(74) Representative: **Maury, Richard Philip**
**Marks & Clerk LLP**
**90 Long Acre**
**London**
**WC2E 9RA (GB)**

(54) **BASE STATION AND SYSTEM INFORMATION NOTIFYING METHOD**

(57) A base station includes a determination unit configured to determine a restriction rate for each of plural kinds of restrictions; a timing determination unit configured to, by using a timing at which a user device in idle mode wakes up in every discontinuous reception cycle, group the user device into any one of a total number $M_G$ of groups and determine a timing for transmitting a paging signal for each of the groups; a restriction group determination unit configured to determine a restriction group number $M_R$ that is less than a sum of all restriction-rate-corresponding group numbers where one of the restriction-rate-corresponding group numbers corresponds to the restriction rate of one of the plural kinds of restrictions, to determine the restriction group number $M_R$ of groups as one or more restriction-target groups, and to change at least one group corresponding to the one or more restriction-target groups in each of predefined periods; and a transmission unit configured to transmit the paging signal to the user device that belongs to at least one of the one or more restriction-target groups, and to transmit system information indicating that the plural kinds of restrictions are applied.

FIG.12

EP 2 750 450 A1

**Description**

<u>TECHNICAL FIELD</u>

The present invention relates to a base station and a system information notification method.

<u>BACKGROUND ART</u>

In the case where a cell or a communication network device of a mobile communication system becomes congested, a base station can avoid a congested state by, for example, barring access from a user device in idle mode and moving the user device to another cell. Moving user devices in one cell to another cell can be implemented by using system information included in a notification signal sent by a base station. For example, status information indicating a state of the cell may be included in the system information, and it may be indicated by the status information whether the cell is congested or not. The system information, in general, includes information elements that are necessary for a user device in order to operate appropriately in a cell. In the case of mobile communication systems of LTE scheme, etc., an information element "cellBarred IE" can be used as status information that indicates a state of the cell. This information element takes a value of "notBarred" in the case of being not congested, and takes a value of "Barred" in the case of being congested. In this way, by having status information, which indicates whether it is congested or not, reported as system information, a user device is able to determine whether a restriction is performed or not. This kind of technology is shown in the non-patent document 1.

<u>RELATED ART DOCUMENT</u>

[NON-PATENT DOCUMENT 1]

3GPP TS36. 304 V8. 9. 0(2010-09), subclause 5. 2. 4 and subclause 5. 3

<u>SUMMARY OF THE INVENTION</u>

PROBLEM TO BE SOLVED BY THE INVENTION

In a cell, there exists, in addition to user devices that are in active mode and communicating user traffic, user devices that are in idle mode. Of the user devices, those that are in idle mode become targets of restrictions. When a user device, which is in idle mode, receives system information (notification signal) indicating that a restriction for the cell is applied, and upon determining that its access on the cell is restricted, the user device tries to move to another cell if necessary. Moving to another cell may be achieved by cell reselection or by redirection. In general, the cell reselection is a technology in which a cell is changed while the idle state of the user device is maintained. The redirection is a technology in which the user device receives a control signal from a network for releasing a connection with the serving cell first, then performs a cell change by selecting a cell according to an instruction in the control signal.

In the meantime, the system information is received by all user devices that reside in the cell. Therefore, in the case where the system information is transmitted indicating that the cell is restricted, many user devices that have received the system information (user devices in idle mode) try to move to another cell all at the same time. For example, many user devices try to move from one cell to another with the movement of a train. As a result, it becomes a concern that the cell to which user devices try to move quickly becomes congested. Especially, in the case of moving to a cell of a different radio access technology (RAT), congestion tends to occur. The reason is that in the case of moving to a cell of a different radio access technology (RAT), user devices need to perform attach processes, location registrations, etc., and a base station to which user devices are moving may get congested when many of such processes occur all at once. Even if there is enough room in a moving-to cell from the viewpoint of total number of user capacity, in the case where the moving-to cell does not have enough capability to handle in timely manner the attaches and the location registrations that occur all at once, it is likely that the moving-to cell goes into a state of congestion. In order to avoid such a congestion in the moving-to cell, a base station can broadcast system information indicating that a restriction is applied. But in this case, user devices are not allowed at all to move to the moving-to cell. That is, even if there is enough room in the moving-to cell from the viewpoint of total number of user capacity, in the case where signal processes for attaches, location registrations, etc., are not performed in a timely manner, the cell restriction is applied, and user devices will not be accepted at all. As shown above, in the case of a system of the related art, it is a concern that the restriction for avoiding congestion may lead to an excess prohibition of communications of user devices.

Also, regarding access requests from users, there exist a plurality of kinds of requests such as control signals of location registrations, etc., voice, data, etc., and it is desirable to be able to restrict with a different restriction rate for a different restriction from the viewpoint of load status of each of network devices that process those requests from users, and from the viewpoint of serviceability.

A problem to be solved by the present invention is to provide just the right amount of restriction for communications of the user devices.

MEANS FOR SOLVING THE PROBLEM

A base station according to an embodiment of the present invention is a base station that includes a determination unit configured to determine a restriction rate for each of a plurality of kinds of restrictions; a timing determination unit configured to, by using a timing at which a user device in idle mode wakes up in every discontinuous reception cycle, group the user device into any one of a total number $M_G$ of groups and determine a timing of transmitting a paging signal for each group; a restriction group determination unit configured to determine a restriction group number that is less than a sum of all restriction-rate-corresponding numbers where one of the restriction-rate-corresponding numbers of groups corresponds to a restriction rate of one of the plurality of kinds of restrictions, to determine the restriction group number of groups as one or more restriction target groups, and to change at least one group corresponding to the one or more restriction target groups in every predefined period; and a transmission unit configured to transmit a paging signal to the user device that belongs to at least one of the one or more restriction target groups, and to transmit system information indicating that two or more kinds of restrictions are applied.

EFFECT OF THE PRESENT INVENTION

According to the present embodiment, for each of a plurality of kinds of restrictions, just the right amount of restriction for communications of the user devices in idle mode can be applied.

BRIEF DESCRIPTION OF THE DRAWINGS

FIG. 1 is a drawing illustrating an example of a situation assumed in an embodiment of the present invention.
FIG. 2 is a functional block diagram of a base station used in the present embodiment.
FIG. 3 is a drawing illustrating a method of grouping a user device into a group using its wake-up timing.
FIG. 4 is a drawing illustrating transmission of system information.
FIG. 5 is a flowchart illustrating an example of operations of restricting UEs in groups on a group-by-group basis.
FIG. 6 is a drawing illustrating details of operations.
FIG. 7 is a drawing illustrating operations of all groups.
FIG. 8 is a drawing illustrating a situation in which two kinds of restrictions are applied independently.
FIG. 9 is a flowchart illustrating an improved example of operations.
FIG. 10 is a flowchart illustrating determination of a notification pattern to be used in a case of applying two restrictions.
FIG. 11 is a flowchart illustrating determination of a notification pattern to be used in a case of applying three restrictions.
FIG. 12 is a drawing illustrating which restriction is applied to which group in the case where operations shown in FIG. 9 are performed.

EMBODIMENTS FOR CARRYING OUT THE INVENTION

According to an embodiment, in the case where a cell is getting congested, by updating system information to be transmitted to user devices, a base station can avoid a situation in which user devices in idle mode move to another cell all together or user devices in idle mode come into the cell all together. The reason is that user devices' moving between the cells is prevented being performed all together all at once, but is performed in stages according to a certain rate. Many user devices in idle mode are divided into a plurality of groups according to paging reception timings at which the user devices in idle mode wake up in each of discontinuous reception cycles, and a paging signal indicating that system information should be received is transmitted to groups in sequence, one or more groups as a unit, one unit of groups at a time. As a result, during a certain unit notification period, only user devices that belong to specific one or more groups receive the system information, and during the subsequent unit notification period, only user devices that belong to different specific one or more groups receive the system information. After user devices that belong to the specific one or more groups start operations based on the system information before the update, user devices that belong to the different specific one or more groups start operations based on the system information after the update. In this way, because the updating and the transmission of system information is performed at least in two stages, a problem that all user devices perform operations at the same time based on the updated system information causing a base station to become congested can be effectively resolved.

Although, in general, regarding the restriction, there are various kinds of restrictions such as a restriction for an out-going call, a restriction for a control signal requesting location registration, a restriction for voice services (VoIP), a restriction for the CSFB, etc., the present embodiment can be used for any type of restriction. The CSFB (Circuit Switched Fall Back) is a service or a process of causing a user to move from an LTE cell to a 3G cell in order to provide voice services to the user residing in an LTE cell. Because there are various kinds of restrictions, there is a case where a plurality of kinds of restriction is applied to a user device. In the case where the plurality of kinds of restrictions is applied, in the case where each restriction is applied independently, there is a concern that paging for each of a plurality of groups is also performed independently, and a number of paging signal transmissions, resources necessary for the transmissions, etc., may increase substantially. Regarding this problem, a base station according to the present embodiment calculates a restriction-rate-corresponding number of groups of the total number $M_G$ of groups corresponding to a restriction rate for each of the plurality of kinds of restrictions, and determines a number $M_R$ of restriction groups that is smaller than the total sum of the restriction-rate-corresponding numbers of groups. The number $M_R$ of groups are determined as one or more restriction target groups. The base station sends a paging signal to a user device that belongs to at least one of the one or more restriction target groups, and sends system information indicating that two or more kinds of restrictions are applied. At least one group corresponding to one or more restriction target groups is changed in every predefined period. The number $M_R$ of restriction groups is maintained constant and smaller than the total sum of the number of groups corresponding to respective restriction rates, and at least one of restriction target groups receives a plurality of restrictions. As described above, the total number of restriction target groups and the number of groups that receive a specific restriction are determined in advance, and the total number of restriction target groups and the number of groups that receive the specific restriction are caused to be maintained even if the restriction target groups are changed in every predefined period. The more the number of restriction target groups, the more the amount of paging that becomes necessary, and according to the present embodiment, the amount of paging, which is needed when restriction target groups are changed, can be limited to equal to or less than a constant value.

In the following, embodiments will be described referring to the accompanying drawings. In the drawings, the same reference numerals are used for the same elements. The embodiments will be described from the following viewpoints.

1. System
2. Base station
3. Example of operation that restricts UEs of each group
4. Example of operation in the case of a plurality of kinds of restrictions
4.1 Example of operation in the case of independently applying the plurality of kinds of restrictions
4.2 Example of improvement for reducing paging amount

<Embodiment 1>

<1. System>

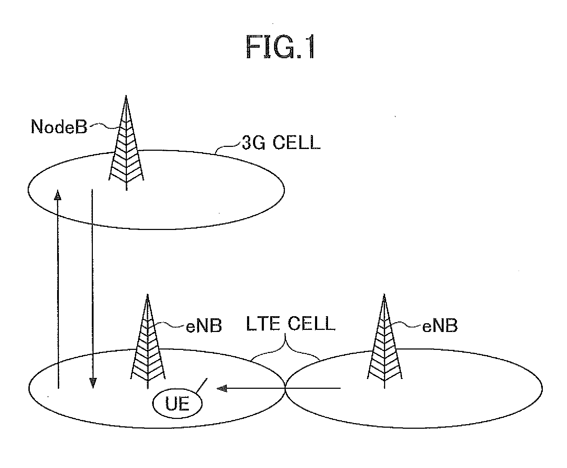

FIG. 1 shows an example of a situation that is assumed in the present embodiment. Two cells in a mobile communication system of an LTE scheme (LTE cells) are shown, and base stations eNBs corresponding to the cells are shown. Another cell, which overlaps geographically at least partially with the LTE cell to the left, is also shown. The other cell is, for example, a cell in a third generation mobile communication system (3G cell), and a base station NodeB (BTS or BS) is also shown.

As an example, the base station eNB of the LTE cell to the left sends system information indicating that communications will be restricted, and prompts a user device, etc., in idle mode residing in the cell to move to another cell (3G cell or LTE cell). As another example, the user device may move from the 3G cell or the LTE cell to the right to the LTE cell to the left. The present embodiment is applicable to any moving direction between the cells.

The moving to another cell may be achieved by a cell reselection or by a redirection. In general, a moving between the cells of the same radio access technology (RAT) is achieved by a cell reselection, and a moving between the cells of different RATs is achieved by a redirection, but the present embodiment is not limited to this kind of configuration. A moving between the cells of the same radio access technology (RAT) may be achieved by a redirection.

A user device UE is typically a mobile station, but may be a fixed station. In order to make it possible to move between the cells of different radio access technologies (RATs), however, it is required that the user device UE has to be able to operate in both the LTE scheme and the 3G scheme. Note that radio access technologies (RATs) such as LTE scheme, 3G scheme, etc., are just examples, and other RATs different from the above may be used. The user device UE is, to be more precise, a portable phone, an information terminal, an advanced portable phone, a smart phone, a tablet type computer, a personal digital assistant, a portable personal computer, etc., but is not limited to these. For the sake of simplicity, one 3G cell and two LTE cells are shown, but the number of cells can be any number. Also, the LTE scheme and the 3G scheme are shown as examples, but mobile communication systems of other schemes may be used.

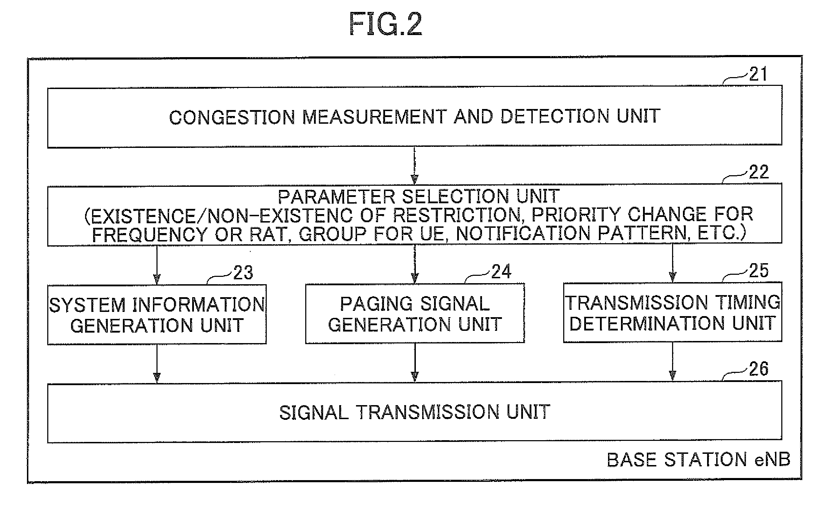

FIG. 2 shows a base station that is used in the situation shown in FIG. 1. The base station may be a base station of an LTE cell eNB or a base station of a 3G cell BS, but for the sake of description convenience, it is assumed to be a base station of an LTE cell. Note that the present invention is not limited to this embodiment and the present invention is applicable for a base station of any system in which access from user devices that reside in the cell in idle mode or access from user devices that newly come into the cell is to be restricted. In FIG. 2, of various function units and process units included in the base station, those especially related to the description of the present embodiment are shown. The base station includes at least a congestion measurement and detection unit 21, a parameter selection unit 22, a system information generation unit 23, a paging signal generation unit 24, a transmission timing determination unit 25 and a signal transmission unit 26.

The congestion measurement and detection unit 21 measures or detects a congestion level of a cell. The congestion level may be measured or detected by any appropriate method. As examples, the congestion level may be measured or detected by a CPU usage rate of a base station, a test signal's round trip delay time (RTD), etc. For example, it may be determined that the cell is not congested in the case where the CPU usage rate of the base station is less than 50%, and that the cell is congested in the case where the CPU usage rate is equal to or more than 50%. Furthermore, the congestion level may be represented by a binary value of congested or not congested, or represented by numbers or levels of more than 2. For example, CPU usage rate percentages may be corresponding to congestion levels. The congestion measurement and detection unit 21 notifies the parameter selection unit 22 of the congestion level value. As an example, in the case where the congestion level of the cell, which has not been congested, becomes more than a predefined threshold value, the congestion measurement and detection unit 21 reports the same and the congestion level to the parameter selection unit 22. Or the other way around, in the case where the congestion level of the cell, which has been congested, becomes less than the predefined threshold value, it may report the same and the congestion level to the parameter selection unit 22.

The congestion level may correspond to a restriction level or a restriction rate. The reason is that while in the case where the congestion level is high, communications of user devices should be restricted by a high restriction rate; in the case where the congestion level is low, the restriction rate may be low, too. In general, regarding the restriction, there are various kinds or restrictions such as a restriction for an out-going call (out-going call restriction), a restriction for a control signal requesting location registration (location registration restriction), a restriction for voice services (VoIP) (VoIP restriction), a restriction for the CSFB (CSFB restriction), etc., and the present embodiment can be applied to any type of restriction. Note that the CSFB (Circuit Switched Fall Back) is a service or a process that provides voice services to a user residing in an LTE cell by causing the user to move from the LTE cell to a 3G cell. As will be described later in an example of operations, in the case where a plurality of kinds of restrictions is applied, a restriction level will be set for each of the kinds of restrictions. For example, a restriction rate of 40% is applied to the location registration restriction and a restriction rate of 20% is applied to the CSFB restriction.

The parameter selection unit 22 selects values for various kinds of parameters used in the present embodiment. To be more precise, the parameter selection unit 22 selects the values for the parameters such as (a) status information indicating whether a restriction is applied or not, (b) priority information of frequency or RAT, (c) user device group information, (d) a parameter indicating a notification pattern, etc., according to the congestion level or the restriction level.

The (a) status information indicating whether a restriction is applied or not may be represented by a binary value indicating congested or not congested. In the case of a mobile communication system of the LTE scheme, an information element of "cellBarred IE" can be used as such status information. This information element takes the value of "notBarred" in the case of being not congested and the value of "Barred" in the case of being congested. The status information indicating whether a restriction is applied or not is included in system information. A user device, which receives the system information indicating whether a restriction is applied or not, is going to operate in accordance with the instruction of the system information. In the case where a plurality of kinds of restrictions is applied, the status information indicating whether a restriction is applied or not is specified for each of the kinds of restrictions. The system information may include not only information indicating whether a restriction is applied or not but also information of restriction level indicating to what extent a restriction is applied. Note that "restriction level", "restriction rate" and "restriction percentage" may be defined as synonyms of "congestion level" or may be defined as different terms. In the present specification, these are used as the synonyms. As an example, in the case where the value of 20% is indicated as a restriction level, and that 20% of restriction rate is applied is indicated by the system information, a user device, which has received this system information, does not send a transmission signal in 20% of the time and sends the transmission signal in 80% of the time when it tries to make an outgoing call. In this example, the percentage for restriction is indicated by the system information, but the percentage for allowing transmission may be indicated by the system information. In this way, in the case where the system information indicates restriction values other than 0% and 100%, a process in the user device becomes complicated, and it is desirable that the system information to be transmitted to the user device indicates 0% or 100%. In this case, however, only the two states of restricting all the user devices and of not restricting any user device can be implemented, and it becomes impossible to provide just the right amount of restriction for communications. As will be described later, in the present embodiment, a partial restriction other than 0% or 100% (for example, restriction level of 20%) can be implemented while sending the system information indicating 0% or 100% restriction to user devices.

The (b) priority information of frequency or RAT indicates a priority of a frequency or a RAT that the user device should use. This kind of priority information may also be included in the system information. By updating the priority information of frequency or RAT appropriately, a frequency or a RAT can be specified for a user device to select a cell. In the case where a priority of another frequency is set higher than the priority of the frequency of the cell in which the user resides, the user device is going to select the cell of the other frequency.

The (c) user device group information includes information indicating which group of a plurality of groups user devices in idle mode belong to (group ID), a total number of groups $M_G$, information indicating a number of restriction target groups, etc. In the case where a user device is in idle mode, the user device wakes up in every discontinuous reception (DRX) cycle, receives and demodulates a control signal, and determines whether to move to a normal receiving mode or not. The user device promptly moves to the normal receiving mode if it is necessary to move, and it stays in idle mode if it is not necessary to move and sleeps until the next wake-up timing. The parameter selection unit 22, using a timing at which a user device in idle mode wakes up in every discontinuous reception cycle, groups the user device into any one of the groups.

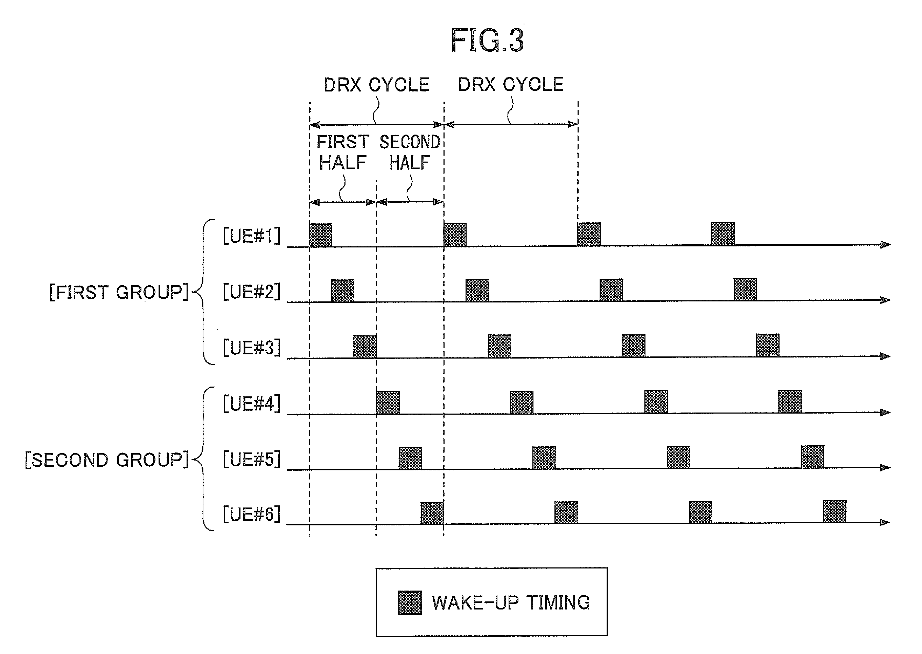

FIG. 3 shows a situation in which various user devices UE#1 through UE#6 wake up in every discontinuous reception cycle (DRX cycle). These user devices all wake up in the same length of discontinuous reception cycle (DRX cycle), but the wake-up timings of user devices are different from each other. It can be assumed that the wake-up timings of user devices in idle mode are distributed over the time axis in even probability. The user devices in discontinuous reception mode (i.e., in idle mode) can be grouped into a plurality of groups based on the wake-up timings distributed in this way. In the case shown in FIg. 3, assuming the wake-up timing of the first user device UE#1 as the reference timing, the user devices UE#1, UE#2 and UE#3 that wake up during the first half period of the DRX cycle are grouped into the first group. The user devices UE#4, UE#5 and UE#6 that wake up during the second half period of the DRX cycle are grouped into the second group. In this way, user devices are grouped or divided into two groups. A number of groups to be grouped or divided can be any number greater than two. In this case, the DRX cycle needs to be divided into a number greater than two. The parameter selection unit 22 in FIG. 2, in this way, determines parameters of group information indicating how to group user devices in idle mode (the way of grouping). To be more precise, values of a parameter indicating the total number of groups $M_G$, a parameter identifying a group to which user devices in idle mode belong, etc., are determined.

The parameter selection unit 22 selects the values of parameters of (a) status information indicating whether a restriction is applied or not, (b) priority information of frequency or RAT, (c) user device group information, (d) a parameter indicating a notification pattern, etc., according to the congestion level or the restriction level. In this case, it is not required that parameters of both (a) status information and (b) priority information are selected. The reason is that the congestion will be able to be avoided by updating any one of the system information items. Therefore, in general, in the case where the congestion level is equal to or more than a predefined value, the parameter selection unit 22 determines how to avoid the congestion and selects both or one of parameters of the (a) status information and the (b) priority. Note that in the present embodiment, it is assumed that at least the (a) status information indicating whether a restriction is applied or not should be used. The parameters selected by the parameter selection unit 22 are reported to the system information generation unit 23, the paging signal generation unit 24 and the transmission timing determination unit 25.

The (d) notification pattern is a pattern of system information indicating whether a plurality of kinds of restrictions is applied or not. For the sake of description convenience, a vector represented by (S1, S2, ... , Sj, ...) is referred to as a "notification pattern". The Sj corresponds to the j'th restriction (j=1, 2, ...). For example, suppose that there is a possibility that the first restriction and the second restriction are to be applied in a cell. For example, the first restriction is an outgoing call restriction, and the second restriction is a CSFB restriction. The pattern of system information "notification pattern" indicating that both the first and the second restrictions are applied is represented by (100%, 100%) or (1, 1). In the case of the present embodiment, because the system information only indicates whether a restriction is applied or not, it may be represented by 100% and 0%, or may be represented by 1 and 0. The pattern of system information "notification pattern" indicating that the first restriction is applied and the second restriction is not applied is represented by (100%, 0%) or (1, 0). The pattern of system information "notification pattern" indicating that the first restriction is not applied and the second restriction is applied is represented by (0%, 100%) or (0, 1). The pattern of system information "notification pattern" indicating that none of the first restriction and the second restriction is applied is represented by (0%, 0%) or (0, 0). Also, in the case where three or more kinds of restrictions exist, it can be represented by a vector of three elements such as (1, 1, 1), (1, 1, 0), (1, 0, 0), etc. A deriving method or a usage example of the notification pattern will be described later.

The system information generation unit 23 generates or edits the system information. In the case where a base station of a cell, which is not congested, avoids the cell congestion, in general, one or more of (a) status information and (b) priority information are updated. For example, (the system information including) the status information indicating that a restriction is not applied is updated to (the system information including) the status information indicating that a restriction is applied. Or, the system information is updated so as to indicate the priority of the frequency or the RAT of another cell becomes higher than the priority of the frequency or the RAT of the cell. Note that it is assumed that in the present embodiment at least the (a) status information indicating whether a restriction is applied or not is included in the system information. The system information generation unit 23 prepares the system information updated in this way.

Note that not only in the case where a non-congested cell is getting congested, but also, to the contrary, in the case where a congested cell is becoming able to accept user devices as usual, the system information indicating such as the status, the priority, etc., is updated. In this case, for example, the status information indicating that the restriction is applied is updated to the status information indicating that the restriction is not applied. Or, the system information is updated so as to indicate the priority of the frequency or the RAT of the cell becomes higher than the priority of the frequency or the RAT of another cell.

The paging signal generation unit 24 generates or edits a paging signal to be transmitted to user devices in discontinuous reception mode. The paging signal is a signal for reporting to the user devices that there is an incoming call, that the system information should be received, etc. In the present embodiment, the paging signal is especially used for reporting to user devices that the system information should be received. The system information is transmitted from the base station at a predefined timing in each of a sequence of unit notification periods.

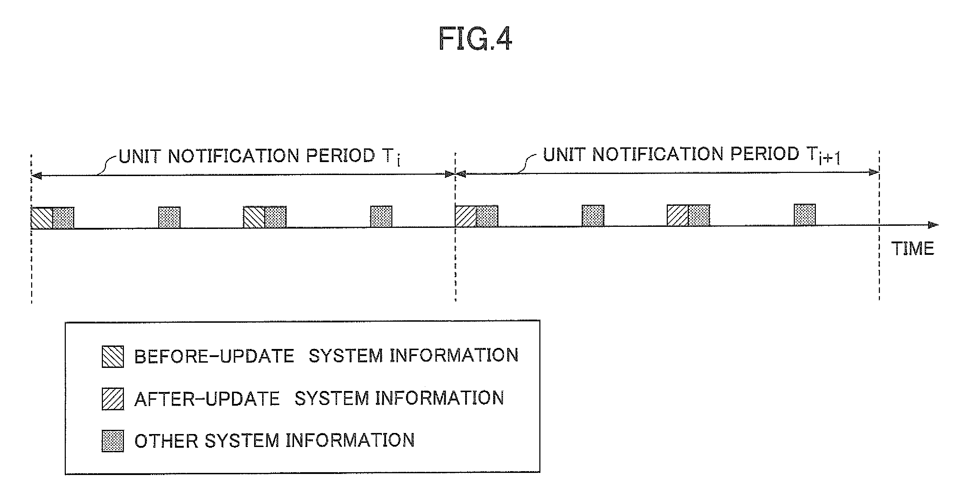

FIG. 4 illustrates the timings at which the system information is transmitted. The system information is transmitted at the predefined timing in each of the sequence of unit notification periods. The length of the unit notification period is defined to be an integer number times (for example, four times) the discontinuous reception cycle of user devices, for example, 2560 ms, but is not limited to this value example. The unit notification period may correspond to a period such as "modification period" in the LTE scheme, but the present embodiment is not limited to this kind of example. The predefined timing or the cycle with which the system information is transmitted is determined appropriately by an operator, and is sent to user devices as a part of system information. The system information in the unit notification period is updated as necessary. As described above, the system information indicating restriction status, priority of frequency, etc., may be updated according to the congestion level of the cell. A paging signal is used for prompting the reception of the system information that is updated in this way. In the case where a user device in idle mode receives a paging signal at the discontinuous wake-up timing in a unit notification period $T_i$, the user device stays in discontinuous reception mode till the next unit notification period $T_{i+1}$, wakes up at the next unit notification period $T_{i+1}$, and receives the system information. In the case where a user device in discontinuous reception mode does not receive such a paging signal, the user device may continue staying in discontinuous reception mode and may not need to receive the system information in the next unit notification period $T_{i+1}$.

The transmission timing determination unit 25 of FIG.2 determines a transmission timing of a signal to be transmitted from the base station eNB. The signal to be transmitted from the base station eNB, in general, includes a control signal and a user traffic signal (including voice signal (VoIP) and data). Of these signals, in the present embodiment, attention is focused especially on the transmission timing of a paging signal and system information (notification signal).

The transmission timing determination unit 25 determines the paging signal notification timing (paging timing) so that only user devices that belong to any one of a plurality of groups can receive the paging signal. As described above, the parameter selection unit 22 divides user devices in idle mode into groups based on the wake-up timings of the user devices in idle mode. Therefore, by dividing the discontinuous reception period for each group, it becomes possible to transmit a paging signal to, limiting to, any of the plurality of groups.

In the case of FIG. 3, there exist the first group and the second group, and each group wakes up in the first half and in the second half of the DRX cycle, respectively. Therefore, the period of the first half of the DRX cycle is determined as the timing (paging signal notification timing) for the user devices that belong to the first group. Also, the period of the second half of the DRX cycle is determined as the timing (paging signal notification timing) for the user devices that belong to the second group. As a result, in the case where in the first unit notification period, the base station transmits a paging signal only in the first half of the DRX cycle, only user devices that belong to the first group receive the paging signal, wake up in the second unit notification period, and receive the system information. Because the system information after the update (for example, information indicating that the restriction is applied) is included in the system information, the user devices of the first group try to operate according to the system information after the update. The user devices that belong to the second group, however, because of not receiving the paging signal in the first unit notification period, and not receiving the system information in the second unit notification period, do not try to operate according to the system information after the update (continue to operate according to the system information before the update). In the second or later unit notification period, the base station, by transmitting the paging signal only in the second half of the DRX cycle, causes only the user devices that belong to the second group to be able to receive the paging signal. As a result, the user devices that belong to the second group wake up in the third or later unit notification period, receive the system information, and try to operate according to the system information after the update.

The signal transmission unit 26, in addition to transmitting ordinary control signals and data signals, specifically transmits a paging signal indicating that the system information after the update should be received and the system information after the update to user devices.

<3. Operational example of restricting UEs in each group>

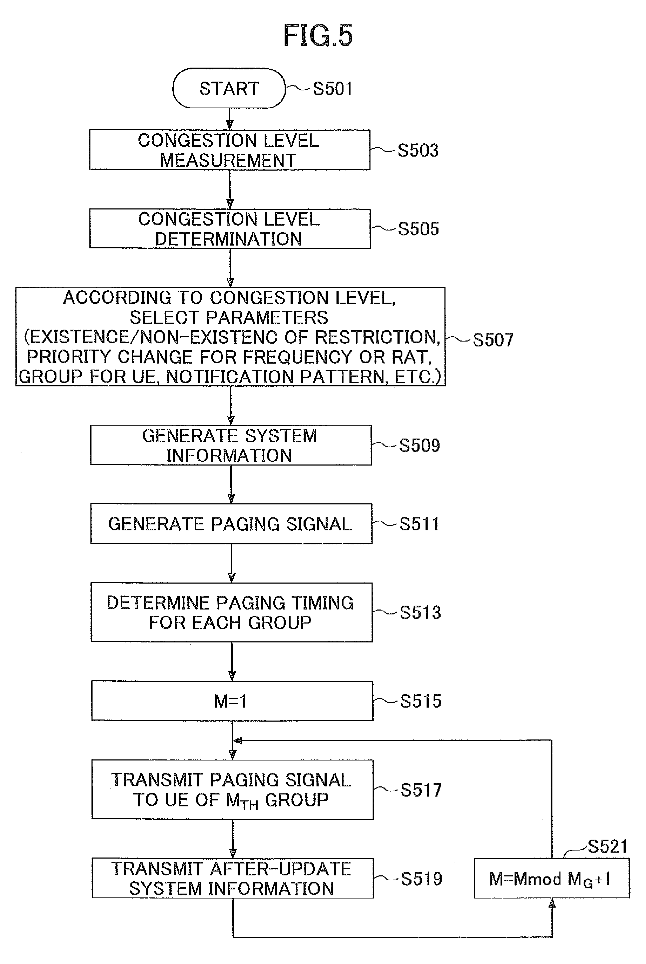

FIG. 5 is a flowchart illustrating an example of an operation to be performed by the base station shown in FIG. 2. The flow starts from step S501 and moves to step S503.

In step S503, the base station, using the congestion measurement and detection unit 21, measures the congestion level of the cell.

In step S505, the base station determines whether the congestion level is equal to or more than a predefined value. In the case where the congestion level is equal to or more than the predefined value, the congestion measurement and detection unit 21 of the base station, together with sending the congestion level, the restriction level, or the restriction rate to the parameter selection unit 22, notifies the parameter selection unit 22 that the system information for avoiding the congestion should be generated. In the case where the congestion level is less than the predefined value, the congestion measurement and detection unit 21 of the base station, together with sending the congestion level, the restriction level, or the restriction rate to the parameter selection unit 22, notifies the parameter selection unit 22 that the system information for accepting the user devices should be generated.

In step S507, the base station, using the parameter selection unit 22, sets the values of the various parameters according to the congestion level or the restriction level. In the case of being congested, the parameter selection unit 22 determines how to avoid the congestion. To be more precise, the values for the parameters such as (a) status information indicating whether a restriction is applied or not, (b) priority information of frequency or RAT, (c) user device group information, (d) a parameter indicating a notification pattern, etc., are selected according to the congestion level. In the case of being not congested, the values of these parameters, in principle, are not updated, but in the case of having just returned to the normal state from the congested state, the values of these parameters are updated to the values for accepting the user devices as usual.

In step S509, the base station, using the system information generation unit 23, generates the system information. The system information in the case where it is necessary to avoid the cell congestion includes in general (a) status information, (b) a priority, (c) group information, (d) a notification pattern, etc., but in the present embodiment it is assumed that the system information includes at least the (a) status information indicating that the restriction is applied. The system information in the case of returning from the congested state to the normal state includes in general (a) status information, (b) a priority, (c) group information, (d) a notification pattern, etc., but in the present embodiment it is assumed that the system information includes at least the (a) status information indicating that the restriction is not applied.

In step S511, the base station, using the paging signal generation unit 24, generates the paging signal. The paging signal in this case indicates that the user device in idle mode, which has received the paging signal, should wake up in the next unit notification period and receive the system information.

In step S513, the base station, using the transmission timing determination unit 25, determines the notification timing of sending the paging signal to the user devices (paging timing). This notification timing is determined in accordance with the wake-up timing of the grouped user devices.

Note that, for the sake of description convenience and illustrating convenience, step S509, step S511 and step S513 are shown to be performed in this order, which is not necessarily required, and may be performed in different order, or all of the processes of the steps or a part of the steps may be performed at the same time.

In step S515, the parameter M, which specifies the group number, is set as 1. Because there exist two or more groups in the present embodiment, the total number of groups $M_G > 1$. As an example, it is assumed that $M_G = 5$, but the total number of groups $M_G$ can be any number.

In step S517, the base station transmits the paging signal in accordance with the timing at which the user devices that belong to the M'th group wake up. This paging signal is received by, of all user devices in idle mode, only user devices that belong to the M'th group, and is not received by user devices that belong to other groups.

In step S519, the base station transmits a notification signal that includes the system information after the update at a predefined timing during a sequence of unit notification periods.

In step S521, the parameter M, which specifies the group, is incremented. Note that in the case where M exceeds the total number of groups $M_G$, M is changed to a value that does not exceed $M_G$. After that, the flow returns to step S517 and processes that have already been described will be repeated.

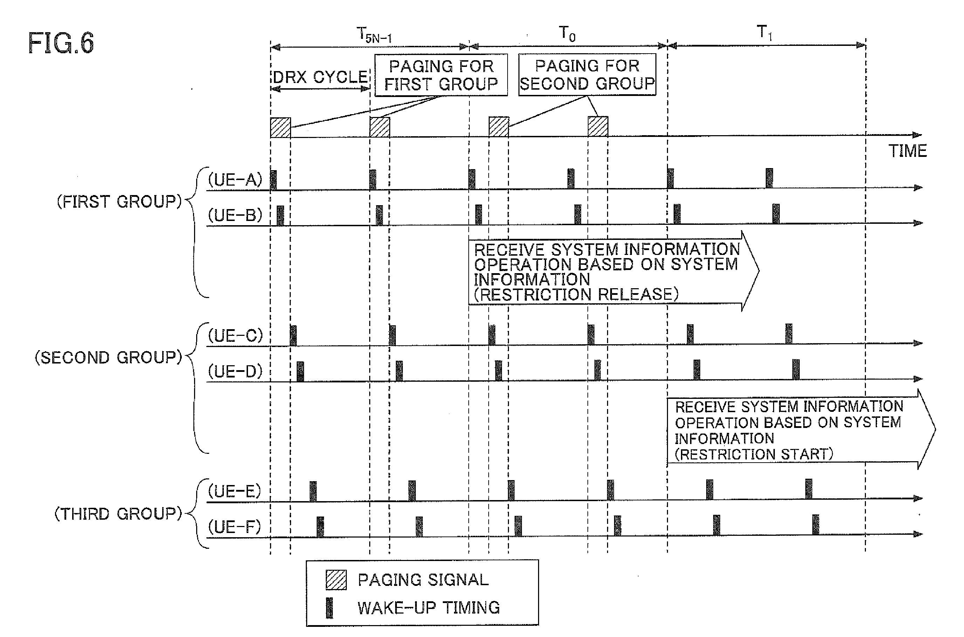

FIG. 6 is a drawing illustrating detailed operations related to step S517 and step S519 of FIG. 5. For the sake of description convenience, it is assumed that the user devices UE-A and UE-B belong to the first group, the user devices UE-C and UE-D belong to the second group, and the user devices UE-E and UE-F belong to the third group. In the case where the total number of groups $M_G$ is 5, there exist, in fact, the fourth group and the fifth group, but for the sake of simplicity, they are not shown in FIG. 6. The system information is transmitted at a predefined timing in each of a sequence of unit notification periods. The unit notification period is set as equal to twice the DRX cycle, and the paging signal timing is specified for each group by dividing the DRX cycle by a number corresponding to the total number of the groups. Note that these numbers are just examples, and any appropriate numbers may be used. Three unit notification periods $T_{5N-1}$, $T_0$ and $T_1$ are shown in accordance with the specific example to be described later. The N indicates that the cycle for changing the groups is N times unit notification period. In the case of the current example, there are five groups ($M_G$=5), and when processes for the first group G1 through the fifth group G5 are completed, the process for the first group G1 is performed. Therefore, the processes for the first group through the fifth group are performed during 5N times unit notification period $T_0$ through $T_{5N-1}$, and those processes are repeated.

For the sake of description convenience, to begin with, it is assumed that in the unit notification period $T_{5N-1}$, the base station transmits a paging signal to the first group G1. This paging signal is not received by the user devices of the second group through the fifth group. The user devices UE-A and UE-B that belong to the first group G1 receive the paging signal in the unit notification period $T_{5N-1}$, stay in discontinuous reception mode until the next unit notification period $T_0$, wake up at the beginning of the unit notification period $T_0$, and receive the system information. In the system information, restriction information in the cell, information indicating the priority of the frequency or the RAT, etc., are included, and, in the unit notification period $T_0$, the user devices UE-A and UE-B try to operate based on the system information. In the current example of operations, the system information indicating that the restriction is not applied is transmitted in the unit notification period $T_0$. This system information is received by the user devices of the first group G1, and the restriction for these user devices is released.

In the unit notification period $T_0$, the base station, in addition to transmitting the system information indicating that the restriction is not applied, transmits a paging signal to the user devices UE-C and UE-D that belong to the second group G2. This paging signal is not received by the user devices of the first, and the third through the fifth groups. The user devices UE-C and UE-D that belong to the second group G2 receive the paging signal in the unit notification period $T_0$, stay in discontinuous reception mode until the next unit notification period $T_1$, wake up at the beginning of the unit notification period $T_1$, and receive the system information. In the system information, restriction information in the cell, information indicating the priority of the frequency or the RAT, etc., are included, and, in the unit notification period $T_1$, the user devices UE-C and UE-D try to operate based on the system information. In the current example of operations, the system information indicating that the restriction is applied is transmitted in the unit notification period $T_1$. This system information is received by the user devices of the second group G2, and the restriction for communications of these user devices is applied.

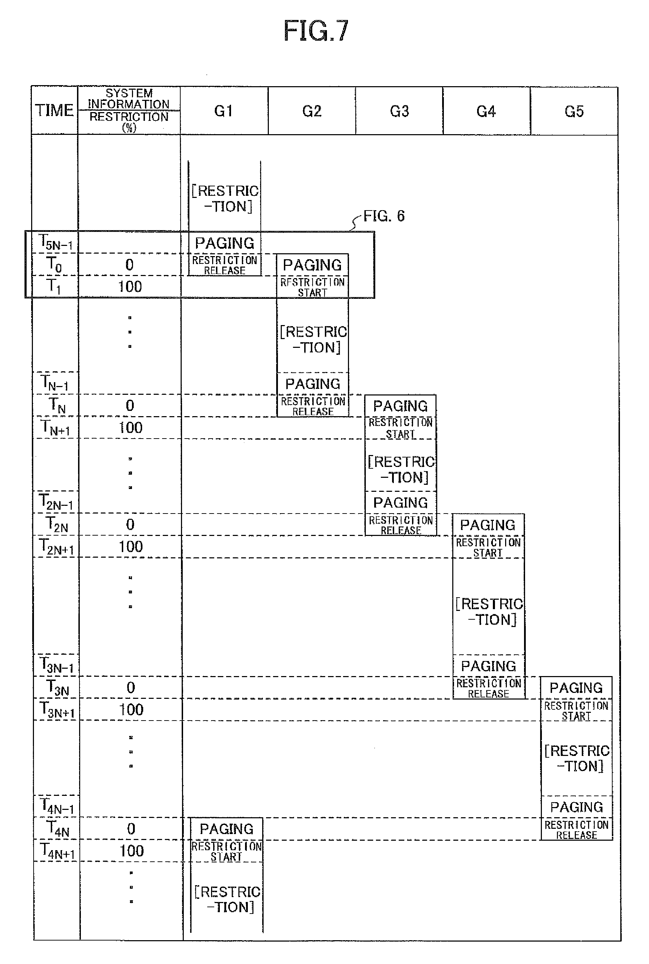

FIG. 7 shows a situation in which in an example of operations shown in FIG. 5 and FIG. 6, the user devices of five groups G1 through G5 are becoming targets of restrictions in series in each of N unit notification periods. As described above, when processes for the first group G1 through the fifth group G5 are completed, the process for the first group G1 is performed again. Therefore, the processes for the first group through the fifth group are performed during 5N times unit notification period $T_0$ through $T_{5N-1}$, and those processes are repeated. During the time when any one of the groups is being the target of restriction, the other groups are not being the target of restriction. By this, a restriction rate of 1/5*100=20% is achieved in a cell as a whole. These numbers are just examples, and any appropriate numbers may be used. For example, in the case of achieving a restriction rate of 40%, it is only necessary that the user devices of two groups out of five are caused to receive a paging signal and subsequent system information. More generally, it is only necessary that a certain value range of congestion levels or restriction levels is associated with a specific number of groups. Preferably, according to the resolution of the congestion level or the restriction level Y%, the total number of groups $M_G$ ($M_G$ =100/Y) is determined. For example, in the case where the congestion level can be measured with 5% resolution, it is preferable that the total number of groups is equal to or more than 20.

As described above, in the present embodiment, the system information reception timing is changed with one or more groups as a unit, and the system information transmission for many user devices is implemented in two or more stages. By doing this, the problem that the cell to which user devices try to move becomes congested as a result of all the user devices operating in idle mode trying at the same time to operate based on the system information can be effectively resolved. For example, in the case where the restriction is applied to all of the five groups, all of the five groups try to change the cell at the same time, and it is likely that the cell to which user devices try to move becomes congested. On the other hand, in the present embodiment, suppose that the congestion level measured by the base station is 20% and that it turns out that if only 20% of the user devices in the cell are caused to move to another cell, then the base station will not be congested. In this case, by applying the restriction to only the user devices that belong to one group out of five groups, the base station can achieve to cause 20% of the user devices to move to another cell. By doing this, not only it is expected that the base station can avoid an excess restriction, but also it is expected that the cell to which user devices move to is capable of accepting user devices without becoming congested if the number of user devices is only about 20% of user devices. In this way, according to the present embodiment of operations, just the right amount of restriction can be applied to the user devices in idle mode residing in the cell.

<4. Example of operations in the case of applying a plurality of kinds of restrictions>

As described above, there exist a plurality of kinds of restrictions. For example, there are various restrictions such as a restriction for an out-going call (out-going call restriction), a restriction for a control signal requesting location registration (location registration restriction), a restriction for voice services (VoIP) (VoIP restriction), a restriction for the CSFB (CSFB restriction), etc. This is caused by a fact that load statuses of communication nodes such as a base station, a switching station, etc., are different depending on the specific content of processes. As a result, not only there are cases where all of the plurality of kinds of restrictions are needed to be applied, but also there is a mixed case where some of the restrictions are needed to be applied but others are actually not needed to be applied. Furthermore, a restriction level or a restriction rate exists for each of the kinds of restrictions, and, in general, those plurality of restriction rates are different from each other. A method for implementing a plurality of kinds of restrictions with different restriction rates like this is to apply each of the restrictions independently.

<<4. 1 Example of operations in the case of applying a plurality of kinds of restrictions independently>>

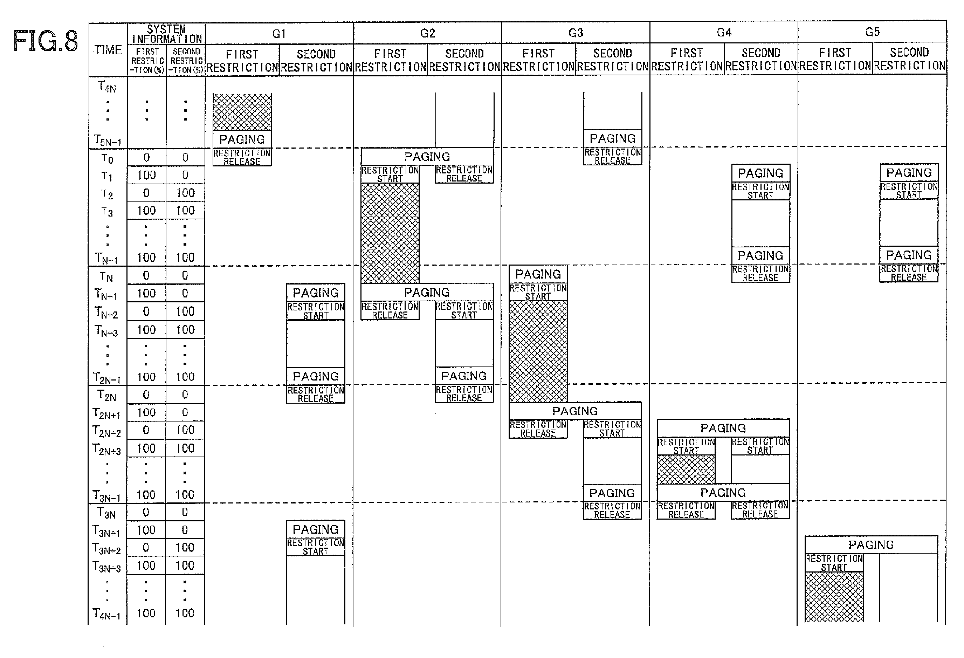

FIG. 8 shows a situation, in which the two kinds of restrictions of the first restriction and the second restriction are applied independently, using a form of a timing chart as shown in FIG. 7. It is different from the example shown in FIG. 7 in that the content of the "notification pattern" of the system information is shown. As described above, the notification pattern, in general, is represented by a vector such as (S1, S2,..., Sj, ...). The Sj corresponds to the J'th restriction (j=1, 2,...). In the current case, because there is a possibility that two restrictions are applied, the "notification pattern" may be represented by, as shown in the figure, (0%, 0%), (100%, 0%), (0%, 100%) or (100%, 100%), or may be represented by (0, 0), (1, 0), (0, 1) or (1, 1). The reason is that the restriction is represented by applied or not applied. As an example, it is assumed that the first restriction is an out-going call restriction and the second restriction is a CSFB restriction, but the restrictions can be any kind. As an example, the restriction rate of the first restriction is 20%. In this case, the restriction is applied to the user devices of one group out of five groups. In general, the first restriction is:

applied to the second group G2 in the period of $T_0$ through $T_{N-1}$,
applied to the third group G3 in the period of $T_N$ through $T_{2N-1}$,
applied to the fourth group G4 in the period of $T_{2N}$ through $T_{3N-1}$,
applied to the fifth group G5 in the period of $T_{3N}$ through $T_{4N-1}$, and
applied to the first group G1 in the period of $T_{4N}$ through $T_{5N-1}$.

As an example, the restriction rate of the second restriction is 40%. In this case, the restriction is applied to the user devices of two groups out of five groups. In general, the second restriction is:

applied to the fourth and the fifth groups G4 and G5 in the period of $T_0$ through $T_{N-1}$,
applied to the first and the second groups G1 and G2 in the period of $T_N$ through $T_{2N-1}$,
applied to the third and the fourth groups G3 and G4 in the period of $T_{2N}$ through $T_{3N-1}$,
applied to the fifth and the first groups G5 and G1 in the period of $T_{3N}$ through $T_{4N-1}$, and
applied to the second and the third groups G2 and G3 in the period of $T_{4N}$ through $T_{5N-1}$.
In order to reduce paging signals (number of transmissions and/or amount of resources), a paging signal is shared by the first restriction and the second restriction in $T_0$ and $T_{N+1}$ for the second group G2. In $T_0$, the paging signal is transmitted to the second group G2, and in $T_1$, the system information is transmitted indicating that the first restriction is applied and the second restriction is not applied. In accordance with this, the user devices of the second group G2 become, from $T_1$, a target of the first restriction and a non-target of the second restriction. Also, in $T_{N+1}$, the paging signal is transmitted to the second group G2, and in $T_{N+2}$, the system information is transmitted indicating that the first restriction is not applied and the second restriction is applied. In accordance with this, the user devices of the second group G2 become, from $T_{N+2}$, a non-target of the first restriction and a target of the second restriction. The similar ideas for reducing paging signals are implemented in $T_{2N+1}$ for the third group G3.

«4. 2 Improved example of reducing the amount of paging»

As shown in FIG. 8, it is preferable to apply each of the restrictions to the groups independently from the viewpoint of capability of implementing by a simple control algorithm, etc. This method is, however, disadvantageous in that, for example, a lot of paging signals are needed when changing groups of restriction target. For example, a case of changing from the state of the period of $T_{4N}$ through $T_{5N-1}$ to the state of the period of $T_0$ through $T_{N-1}$ is considered.

In the state of the period of $T_{4N}$ through $T_{5N-1}$, the first restriction is applied to the first group G1 and the second restriction is applied to the second and the third groups G2 and G3. In the state of the period of $T_0$ through $T_{N-1}$, the first restriction is applied to the second group G2 and the second restriction is applied to the fourth and the fifth groups G4 and G5. In this case, a paging signal needs to be transmitted to the first and the third groups G1 and G3 in $T_{5N-1}$, to the second group G2 in $T_0$, and to the fourth and the fifth groups G4 and G5 in $T_1$, respectively. Likewise, during the next time of restriction change, a paging signal needs to be transmitted to the fourth and the fifth groups G4 and G5 in $T_{N-1}$, to the third group G3 in $T_N$, and to the first and the second groups G1 and G2 in $T_{N+1}$, respectively. When a lot of paging signals like this are transmitted, it becomes difficult to use paging signals for other purposes such as a paging of incoming call, a notification of emergency information, etc.

Therefore, in a communication system in which user devices in idle mode are divided into a plurality of groups and plural kinds of restrictions are applied to the user devices of the groups, it is preferable that the number of paging signals needed for changing one or more groups of restriction target is as small as possible. As described referring to FIG. 3, FIG. 6, etc., the notification timing of the paging signal is specified for each group. Therefore, the more the number of groups of restriction target is, the more are the number of paging signals needed when changing the groups. In other words, if the number of groups of restriction target can be reduced, it becomes possible to reduce paging signals when changing the groups. The improved embodiment to be described below is based on this kind of consideration above.

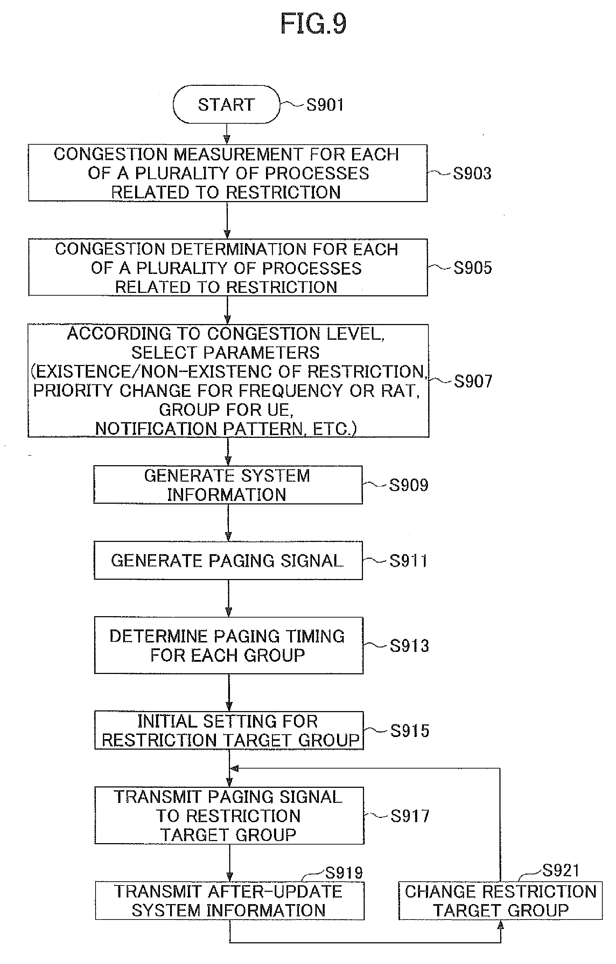

FIG. 9 is a flowchart illustrating an example of operations performed by the base station shown in FIG. 2. The flow starts from step S901 and moves to step S903.

In step S903, the base station, using the congestion measurement and detection unit 21, measures a congestion level for each of a plurality of processes related to restrictions. The processes related to restrictions are, for example, a process for an out-going call, a process for performing the location registration according to the location registration request, a process for providing voice services (VoIP), a process for performing the CSFB, etc., but are not limited to these processes. The process for an out-going call is related to an out-going call restriction. The process for performing location registration according to the location registration request is related to a location registration restriction. The process for performing the voice services (VoIP) is related to a VoIP restriction. The process for performing the CSFB is related to a CSFB restriction.

In step S905, the base station determines, regarding each of the plurality of processes related to restriction, whether the congestion level is equal to or more than a predefined value. In the case where the congestion level is equal to or more than the predefined value, the congestion measurement and detection unit 21 of the base station, together with sending the congestion level, the restriction level, or the restriction rate to the parameter selection unit 22, notifies the parameter selection unit 22 that the system information should be generated for applying restriction for the process. In the case where the congestion level is less than the predefined value, the congestion measurement and detection unit 21 of the base station, together with sending the congestion level, the restriction level, or the restriction rate to the parameter selection unit 22, notifies the parameter selection unit 22 that the system information should be generated for not applying restriction for the process and for accepting user devices.

In step S907, the base station, using the parameter selection unit 22, sets the values of the various parameters according to the congestion level, the restriction level or the restriction rate. In the case of being congested, the parameter selection unit 22 determines how to avoid the congestion. In general, the values for the parameters such as (a) status information indicating whether a restriction is applied or not, (b) priority information of frequency or RAT, (c) user device group information, (d) a parameter indicating a notification pattern, etc., are selected according to the congestion level. In the case of not being congested, these values of the parameters are in principle not updated, but in the case of having just returned to the normal state from the congested state, the values of these parameters are updated to the values for accepting the user devices as usual.

For the sake of description convenience, it is assumed that in step S905, a plurality of processes related to restrictions are congested and it is reported to the parameter selection unit 22, together with each restriction rate, that a plurality of corresponding restrictions are needed to be applied. As an example, it is assumed that it is reported to the parameter selection unit 22 that the restriction rate of the first restriction of the out-going call restriction is 20% and the restriction rate of the second restriction of the CSFB restriction is 40%. It is assumed that the total number of groups $M_G$ is five. Therefore, in order to implement the first restriction, it is only necessary that the restriction be applied to user devices of the number of $N_1=1$ group (1/5*100=20). In order to implement the second restriction, it is only necessary that the restriction be applied to user devices of the number of $N_2=2$ groups (2/5*100=40). In this way, the parameter selection unit 22 calculates a number of groups out of the total $M_G$ groups that corresponds to each of the restriction rates. Note that the restriction group number $M_R$ is equal to or more than the maximum number of all of the numbers of groups corresponding to the restriction rates. In the current example, a number that is less than $N_{1+}N_2=3$ and equal to or more than $N_2=2$ is set as the restriction group number (=2).

$$\max(N_1, N_2) \leq M_R < (N_1 + N_2)$$

max(x,y) is a function that returns a bigger value from x and y.

Suppose that $N_1 = 2$ and $N_2 = 4$. In this case, a number, which is smaller than $N_1 + N_2 = 6$ and is equal to or more than $N_2 = 4$, is 4 or 5. In this case, 4 or 5 can be used as the restriction group number $M_R$. Because the more the number of groups of the restriction targets is, the more is the number of paging signals needed for changing restriction groups, the paging signals can be reduced in the case where the restriction group number $M_R$ is 4 or 5, regardless of which number, compared to the case where $M_R$ is 6. It is preferable to make the restriction group number $M_R$ be the maximum number of $N_1$ and $N_2$ (=4) from the viewpoint of most effectively reducing paging signals. In general, in the case where the number of restriction kinds is L, the $M_R$ that satisfies the following formula can be used as a restriction group number.

$$\max(N_1, N_2, \ldots, N_L) \leq M_R < (N_1 + N_2 + \ldots + N_L)$$

Note that it is preferable from the viewpoint of most effectively reducing paging signals to make:

$$M_R = \max(N_1, N_2, \ldots, N_L)$$

The restriction group number $M_R$ is a number of groups to which a certain restriction is applied in the same period, and the restriction group number $M_R$ is not changed even if the restriction target groups are changed. In the case of an example where $N_1 = 1$ and $N_2 = 2$, the restriction group number $M_R$ is 2 ($M_R = 2$). Restrictions applied to each of the 2 groups are determined according to the "notification pattern" described above. The "notification pattern" is a pattern of the system information indicating whether a plurality of kinds of restrictions are applied or not. As described above, it is assumed that a vector expressed by (S1, S2,...,Sj,...) represents the "notification pattern". Sj corresponds to the j'th restriction. As an example, the notification pattern is determined as follows.

In the case of a current example, a number of $N_1 = 1$ group is restricted in order to implement the first restriction. A number of $N_2 = 2$ groups are restricted in order to implement the second restriction. Therefore, it is considered that of the restriction group number $M_R = 2$ of groups, to one group, the first and the second restrictions are applied, and to another group, only the second restriction is applied. That is, to one group, the notification pattern of (100%, 100%) or (1, 1) is applied, and to another group, the notification pattern of (0%, 100%) or (0, 1) is applied.

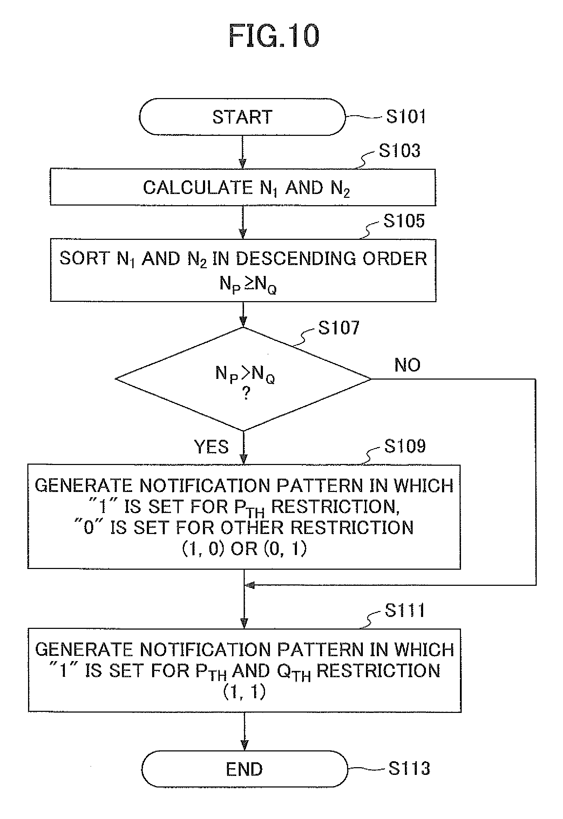

FIG. 10 illustrates an example of operations for determining the notification pattern to be used in the case where two restrictions of the first restriction and the second restriction are applied. Specific examples of the restrictions and examples of the numbers are as described above. The flow starts from step S101 and moves to step S103.

In step S103, a number of groups needed for implementing the first restriction $N_1$ and a number of groups needed for implementing the second restriction $N_2$ are calculated. In the case of the current example, $N_1 = 1$ and $N_2 = 2$.

In step S105, the numbers of the first groups and the second groups $N_1$ and $N_2$ are sorted in descending order. For the sake of convenience, the sorted numbers of groups are referred to $N_P$ and $N_Q$ ($N_P \geq N_Q$). P and Q are 1 or 2, respectively. In the case of the current example, P=2 and Q=1.

In step S107, it is determined whether $N_P$ is more than $N_Q$, that is, $N_P$ is not equal to $N_Q$. In the case of the current example, because Np=2 is more than $N_Q = 1$, the flow moves to step S109.

In step S109, one notification pattern is generated. This notification pattern is generated by setting "1" or "100%" for the P'th restriction and setting "0" or "0%" for other restriction. In the case of a current example, because P=2 and Q=1, the notification pattern of (0, 1) or (0%, 100%) is generated.

In step S111, another notification pattern is generated. This notification pattern is generated by setting "1" or "100%" for the P'th and the Q'th restrictions, and the notification pattern of (1, 1) or (100%, 100%) is generated.

In step S107, suppose that $N_P = N_Q$. In this case (for example, in the case of $N_2 = N_1 = 2$), the flow moves to step S111, and by setting "1" or "100%" for the P'th and the Q'th restrictions, the notification pattern of (1, 1) or (100%, 100%) is generated.

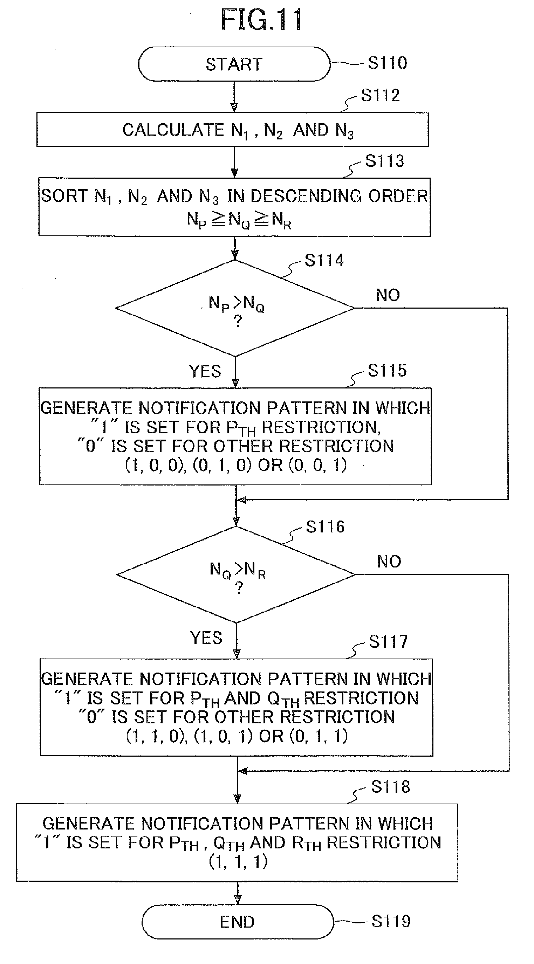

FIG. 11, which is different from the current example, illustrates how to generate the notification pattern in the case where three kinds of restrictions are applied. Similar to the case of FIG. 10, numbers of groups needed for implementing restriction rates $N_1$, $N_2$ and $N_3$ are calculated (S112), and are sorted in descending order (S113). For the sake of convenience, it is assumed that $N_P \geq N_Q \geq N_R$. P, Q and R are 1, 2 or 3. In the case where $N_P$ is more than $N_Q$ (S114), by setting "1" or "100%" for the P'th restriction and setting "0" or "0%" for other restrictions, the notification pattern is generated (S115). In the case where $N_P$ is equal to $N_Q$, the process of S115 is not performed and the flow moves to step S116. In the case where $N_Q$ is more than $N_R$ (S116), by setting "1" or "100%" for the P'th and the Q'th restrictions, and by setting "0" or "0%" for other restrictions, the notification pattern is generated (S117). In the case where $N_Q$ is equal to $N_R$, the process of step S117 is not performed and the flow moves to step S118. Then in step S118, by setting "1" or "100%" for the P'th, the Q'th and the R'th restrictions, the notification pattern of (1, 1, 1) or (100%, 100%, 100%) is generated. FIG. 10 and FIG. 11 are just examples for deriving the notification pattern, and the notification pattern for any kind of restriction can be derived appropriately.

The flow in FIG. 10 moves to step S113 and ends. The method of generating the notification pattern shown in the figure is just an example, and the notification pattern may be generated by any appropriate method. At any rate, when the "restriction group number $M_R$" and the "notification pattern" are determined, the flow in FIG. 9 moves from step S907 to step S909.

In step S909, the system information generation unit 23 of the base station, according to the notification pattern described above, generates system information indicating whether a plurality of restrictions are applied.

In step S911, the base station, using the paging signal generation unit 24, generates a paging signal. The paging signal in this case indicates that the user devices in idle mode that receive the paging signal should wake up in the next unit notification period and receive the system information.

In step S913, the base station, using the transmission timing determination unit 25, determines the notification timing for sending a paging signal to user devices (paging timing). This notification timing is determined in accordance with the timing at which the grouped user devices wake up.

Note that for the sake of description and illustration convenience, step S909, step S911 and step S913 are shown to be performed in this order, which is not required, and may be performed in a different order, or all or part of the processes of the plurality of steps may be performed at the same time.

In step S915, groups of restriction targets are initially set. The groups of restriction targets exist in the number of restriction groups $M_R$, and the restriction indicated by the "notification pattern" is applied to each of the corresponding groups. For the sake of description convenience, it is assumed that the total number of groups $M_G=5$ and the restriction group number $M_R=2$. Note that these numbers can be any number. In the case of an example described above, the notification patterns are (0, 1) and (1, 1), or (0%, 100%) and (100%, 100%).

In step S917, the base station transmits a paging signal at the timing according to the timing at which user devices that belong to the restriction target group wake up. This paging signal is received only by user devices that belong to the restriction target group out of all user devices in idle mode, and not received by user devices that belong to other groups.

In step S919, the base station transmits the notification signal including system information after the update at the predefined timing in a sequence of unit notification periods. In the system information, whether a plurality of restrictions is applied is indicated according to the notification pattern.

In step S921, the restriction target groups are changed. After that, the flow returns to step S917, and processes that are already described are repeated.

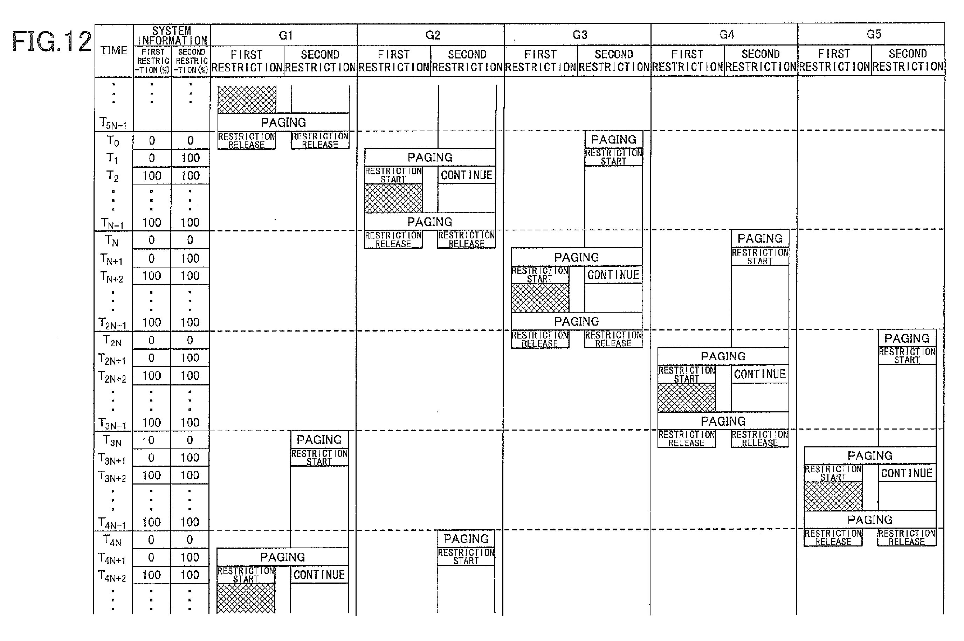

FIG. 12 shows what kind of restriction is applied to each group in the case where steps S915, S917, S919 and S921 of FIG. 9 are performed repeatedly.

In the period of $T_0$ through $T_{N-1}$, the restriction target groups are G2 and G3. The base station transmits a paging signal to the second group G2 in $T_1$. In $T_2$, user devices of the second group G2 receive the system information of the notification pattern represented by (100%, 100%). By this, both the first and the second restrictions are applied to the second group G2. Also, the base station transmits a paging signal to the third group G3 in $T_0$. In $T_1$, user devices of the third group G3 receive the system information of the notification pattern represented by (0%, 100%). By this, only the second restriction is applied to the third group G3. The first restriction is only applied to the second group G2, and the restriction rate of 20% is achieved for the first restriction. The second restriction is applied to the second and the third groups G2 and G3, and the restriction rate of 40% is achieved for the second restriction.

In the period of $T_N$ through $T_{2N-1}$, the restriction target groups are G3 and G4. The base station transmits a paging signal to the third group G3 in $T_{N+1}$. In $T_{N+2}$, the user devices of the third group G3 receive the system information of the notification pattern represented by (100%, 100%). By this, both the first and the second restrictions are applied to the third group G3. Also, the base station transmits a paging signal to the fourth group G4 in $T_N$. In $T_{N+1}$, the user devices of the fourth group G4 receive the system information of the notification pattern represented by (0%, 100%). By this, to the fourth group G4, only the second restriction is applied. The first restriction is only applied to the third group G3, and the restriction rate of 20% is achieved for the first restriction. The second restriction is applied to the third and the fourth groups G3 and G4, and the restriction rate of 40% is achieved for the second restriction.

In the period of $T_{2N}$ through $T_{3N-1}$, the similar operations are performed for the two restriction target groups G4 and G5. In the period of $T_{3N}$ through $T_{4N-1}$, the similar operations are performed for the two restriction target groups G5 and G1. In the period of $T_{4N}$ through $T_{5N-1}$, the similar operations are performed for the two restriction target groups G1 and G2.

In the case where the restriction target groups are changed, for example, in the case where they are changed from G2 and G3 to G3 and G4, in each of the three periods of $T_{N-1}$, $T_N$ and $T_{N+1}$, a paging signal is transmitted to each of the groups. Also in other periods where restriction target groups are changed, paging signals are transmitted only to three groups. This point is very different from the case of an example shown in FIG. 8. Furthermore in the case of an example shown in FIG. 12, notice that the notification pattern of (1, 0) or (100%, 0%) is not needed. This point is also very different from the case of an example shown in FIG. 8. Therefore, in the case of an example shown in FIG. 12, in addition to paging signals being able to be reduced, the notification pattern in transmitting system information is able to be simplified.

Note that in the case where the restriction group number $M_R$ is two or more, from the point of reducing paging signals, it is preferable for the restriction target groups to be specified in the consecutive number order (for example, in ascending number order) of the group identification number as shown in FIG. 12.

As described above, the present invention has been described referring to specific embodiments, but these embodiments are just examples and a person skilled in the art would understand various modified embodiments, amended embodiments and replacement embodiments. For example, the present invention may be applied to any appropriate mobile communication system that tries to restrict a part of user devices. For example, the present invention may be applied to a W-CDMA system, an HSDPA/HSUPA type W-CDMA system, an LTE system, an LTE-Advanced system, an IMT-Advanced system, a WiMAX, a Wi-Fi system, etc. Specific numbers are used in description for the sake of easy understanding, but those numbers are used just as examples, and, unless otherwise noted, any appropriate number can be used. Specific formulas are used in description for the sake of easy understanding, but those formulas are used just as examples, and, unless otherwise noted, any appropriate formula can be used. Division of embodiments or items is not essential for the present invention, and things described in more than one items may be used in combination as necessary, or a thing described in an item may be applied to a thing described in a different item (as long as it does not conflict). Borders of function units or processing units in functional block diagrams do not necessarily correspond to borders of physical components. Operations of multiple function units may be performed in physically one component, or operations of one function unit may be performed by physically multiple components. For the sake of convenience, devices of the present embodiments are described using a functional block diagram, but those devices may be realized as hardware, software, or combination of both. The software may be provided in a Random Access Memory (RAM), a Flash memory, a Read-Only Memory (ROM), an EPROM, an EEPROM, a register, a hard disk (HDD), a removable disk, a CD-ROM, a database, a server, or any other appropriate memory media. The present invention is not limited to the embodiments described above, but various modified embodiments, amended embodiments and replacement embodiments, etc., are included in the present invention without departing from the spirit of the present invention.

The present application is based on and claims the benefit of priority of Japanese Priority Application No. 2011-182541 filed on August 24, 2011 the entire contents of which are hereby incorporated by reference.

DESCRIPTION OF THE REFERENCE NUMERALS

21 Congestion measurement and detection unit
22 Parameter selection unit
23 System information generation unit
24 Paging signal generation unit
25 Transmission timing determination unit
26 Signal transmission unit
eNB LTE base station
NodeB 3G base station
UE User device

Claims

1. A base station comprising:

a determination unit configured to determine a restriction rate for each of a plurality of kinds of restrictions;
a timing determination unit configured to, by using a timing at which a user device in idle mode wakes up in a discontinuous reception cycle, group the user device into any one of a total number $M_G$ of groups and determine a timing of transmitting a paging signal for each of the groups;
a restriction group determination unit configured to determine a restriction group number $M_R$ that is less than a sum of all restriction-rate-corresponding group numbers where one of the restriction-rate-corresponding group numbers corresponds to the restriction rate of one of the plurality of the kinds of restrictions, to determine the restriction group number $M_R$ of the groups as one or more restriction target groups, and to change at least one of the groups corresponding to the one or more restriction target groups in each of predefined periods; and a transmission unit configured to transmit the paging signal to the user device that belongs to at least one of the one or more restriction target groups, and to transmit system information indicating that two or more of the kinds of restrictions are applied.

2. The base station as claimed in claim 1, further comprising:

a system information generation unit configured to generate the system information indicating whether the plurality of the kinds of restrictions are applied or not, wherein the system information transmitted by the transmission unit is generated in accordance with the restrictions applied to any one of the groups corresponding to the one or more restriction target groups.

3. The base station as claimed in claim 1, wherein a number of groups, to which one or more specific restrictions are applied in the one or more restriction target groups, is maintained constant in the plurality of predefined periods.

4. The base station as claimed in claim 1, wherein in the case where the restriction group number $M_R$ is equal to or more than two, the restriction group determination unit determines consecutive groups of a series of the total number $M_G$ of groups as the one or more restriction target groups.

5. A method of system information notification in a base station, the method comprising a step of:

determining a restriction rate for each of a plurality of kinds of restrictions;
by using a timing at which a user device in idle mode wakes up in a discontinuous reception cycle, grouping the user device into any one of a total number $M_G$ of groups and determining a timing for transmitting a paging signal for each of the groups;
determining a restriction group number $M_R$ that is less than a sum of numbers of all of the restriction rates of the plurality of the kinds of restrictions, each of the numbers corresponding to one of the restriction rates, and determining the restriction group number $M_R$ of groups as one or more restriction target groups;
transmitting the paging signal to the user device that belongs to at least one of the one or more restriction target groups, and
transmitting system information indicating that two or more of the kinds of restrictions are applied, wherein at least one of the groups corresponding to the one or more restriction target groups is changed in each of predefined periods.

# FIG.1

NodeB

3G CELL

eNB    LTE CELL    eNB

UE

# FIG.2

**BASE STATION eNB**

- CONGESTION MEASUREMENT AND DETECTION UNIT `~21`
- PARAMETER SELECTION UNIT
  (EXISTENCE/NON-EXISTENC OF RESTRICTION, PRIORITY CHANGE FOR
  FREQUENCY OR RAT, GROUP FOR UE, NOTIFICATION PATTERN, ETC.) `~22`
- SYSTEM INFORMATION GENERATION UNIT `~23`
- PAGING SIGNAL GENERATION UNIT `~24`
- TRANSMISSION TIMING DETERMINATION UNIT `~25`
- SIGNAL TRANSMISSION UNIT `~26`

EP 2 750 450 A1

# FIG.3

WAKE-UP TIMING

# FIG.4

UNIT NOTIFICATION PERIOD $T_i$      UNIT NOTIFICATION PERIOD $T_{i+1}$

TIME

☒ BEFORE-UPDATE SYSTEM INFORMATION

▨ AFTER-UPDATE SYSTEM INFORMATION

▦ OTHER SYSTEM INFORMATION

EP 2 750 450 A1

# FIG.5

START — S501

CONGESTION LEVEL MEASUREMENT — S503

CONGESTION LEVEL DETERMINATION — S505

ACCORDING TO CONGESTION LEVEL, SELECT PARAMETERS (EXISTENCE/NON-EXISTENC OF RESTRICTION, PRIORITY CHANGE FOR FREQUENCY OR RAT, GROUP FOR UE, NOTIFICATION PATTERN, ETC.) — S507

GENERATE SYSTEM INFORMATION — S509

GENERATE PAGING SIGNAL — S511

DETERMINE PAGING TIMING FOR EACH GROUP — S513

M=1 — S515

TRANSMIT PAGING SIGNAL TO UE OF $M_{TH}$ GROUP — S517

TRANSMIT AFTER-UPDATE SYSTEM INFORMATION — S519

$M = M \bmod M_G + 1$ — S521

FIG.6

# FIG.7

| TIME | SYSTEM INFORMATION RESTRICTION (%) | G1 | G2 | G3 | G4 | G5 |
|------|------|------|------|------|------|------|
| | | [RESTRIC-TION] | | FIG. 6 | | |
| $T_{5N-1}$ | | PAGING | | | | |
| $T_0$ | 0 | RESTRICTION RELEASE | PAGING | | | |
| $T_1$ | 100 | | RESTRICTION START | | | |
| | | : | [RESTRIC-TION] | | | |
| $T_{N-1}$ | | | PAGING | | | |
| $T_N$ | 0 | | RESTRICTION RELEASE | PAGING | | |
| $T_{N+1}$ | 100 | | | RESTRICTION START | | |
| | | | | [RESTRIC-TION] | | |
| $T_{2N-1}$ | | | | PAGING | | |
| $T_{2N}$ | 0 | | | RESTRICTION RELEASE | PAGING | |
| $T_{2N+1}$ | 100 | | | | RESTRICTION START | |
| | | | | | [RESTRIC-TION] | |
| $T_{3N-1}$ | | | | | PAGING | |
| $T_{3N}$ | 0 | | | | RESTRICTION RELEASE | PAGING |
| $T_{3N+1}$ | 100 | | | | | RESTRICTION START |
| | | | | | | [RESTRIC-TION] |
| $T_{4N-1}$ | | | | | | PAGING |
| $T_{4N}$ | 0 | PAGING | | | | RESTRICTION RELEASE |
| $T_{4N+1}$ | 100 | RESTRICTION START | | | | |
| | | : | | | | |
| | | [RESTRIC-TION] | | | | |

22

FIG.8

# FIG.9

START ~S901

CONGESTION MEASUREMENT FOR EACH OF A PLURALITY OF PROCESSES RELATED TO RESTRICTION ~S903

CONGESTION DETERMINATION FOR EACH OF A PLURALITY OF PROCESSES RELATED TO RESTRICTION ~S905

ACCORDING TO CONGESTION LEVEL, SELECT PARAMETERS (EXISTENCE/NON-EXISTENC OF RESTRICTION, PRIORITY CHANGE FOR FREQUENCY OR RAT, GROUP FOR UE, NOTIFICATION PATTERN, ETC.) ~S907

GENERATE SYSTEM INFORMATION ~S909

GENERATE PAGING SIGNAL ~S911

DETERMINE PAGING TIMING FOR EACH GROUP ~S913

INITIAL SETTING FOR RESTRICTION TARGET GROUP ~S915

TRANSMIT PAGING SIGNAL TO RESTRICTION TARGET GROUP ~S917

TRANSMIT AFTER-UPDATE SYSTEM INFORMATION ~S919

CHANGE RESTRICTION TARGET GROUP ~S921

# FIG.10

START — S101

↓

CALCULATE $N_1$ AND $N_2$ — S103

↓

SORT $N_1$ AND $N_2$ IN DESCENDING ORDER
$N_P \geq N_Q$ — S105

↓

$N_P > N_Q$
? — S107

NO →

YES ↓

GENERATE NOTIFICATION PATTERN IN WHICH
"1" IS SET FOR $P_{TH}$ RESTRICTION,
"0" IS SET FOR OTHER RESTRICTION
(1, 0) OR (0, 1) — S109

↓

GENERATE NOTIFICATION PATTERN IN WHICH
"1" IS SET FOR $P_{TH}$ AND $Q_{TH}$ RESTRICTION
(1, 1) — S111

↓

END — S113

# FIG.11

```
        ┌─────────────────────┐
        │        START        │──── S110
        └─────────────────────┘
                   │
                   ▼
        ┌─────────────────────────────┐  ── S112
        │  CALCULATE $N_1$, $N_2$ AND $N_3$  │
        └─────────────────────────────┘
                   │
                   ▼
   ┌──────────────────────────────────────────┐  ── S113
   │ SORT $N_1$, $N_2$ AND $N_3$ IN DESCENDING ORDER │
   │           $N_P \geqq N_Q \geqq N_R$            │
   └──────────────────────────────────────────┘
                   │
                   ▼
              ◇ S114
         $N_P > N_Q$ ?          NO ──────────────┐
              │                                  │
             YES                                 │
              ▼       ── S115                    │
   ┌──────────────────────────────────────────┐ │
   │ GENERATE NOTIFICATION PATTERN IN WHICH    │ │
   │  "1" IS SET FOR $P_{TH}$ RESTRICTION,     │ │
   │  "0" IS SET FOR OTHER RESTRICTION         │ │
   │  (1, 0, 0), (0, 1, 0) OR (0, 0, 1)        │ │
   └──────────────────────────────────────────┘ │
                   │◄─────────────────────────────┘
                   ▼
              ◇ S116
         $N_Q > N_R$ ?          NO ──────────────┐
              │                                  │
             YES                                 │
              ▼       ── S117                    │
   ┌──────────────────────────────────────────────┐ │
   │ GENERATE NOTIFICATION PATTERN IN WHICH        │ │
   │  "1" IS SET FOR $P_{TH}$ AND $Q_{TH}$ RESTRICTION │ │
   │  "0" IS SET FOR OTHER RESTRICTION             │ │
   │  (1, 1, 0), (1, 0, 1) OR (0, 1, 1)            │ │
   └──────────────────────────────────────────────┘ │
                   │◄─────────────────────────────────┘
                   ▼       ── S118
   ┌──────────────────────────────────────────────┐
   │ GENERATE NOTIFICATION PATTERN IN WHICH        │
   │  "1" IS SET FOR $P_{TH}$, $Q_{TH}$ AND $R_{TH}$ RESTRICTION │
   │  (1, 1, 1)                                    │
   └──────────────────────────────────────────────┘
                   │
                   ▼
        ┌─────────────────────┐
        │         END         │──── S119
        └─────────────────────┘
```

FIG.12

| TIME | SYSTEM INFORMATION | | G1 | | G2 | | G3 | | G4 | | G5 | |
|------|--------------------|---|----|---|----|---|----|---|----|---|----|---|
| | FIRST RESTRICTION(%) | SECOND RESTRICTION(%) | FIRST RESTRICTION | SECOND RESTRICTION | FIRST RESTRICTION | SECOND RESTRICTION | FIRST RESTRICTION | SECOND RESTRICTION | FIRST RESTRICTION | SECOND RESTRICTION | FIRST RESTRICTION | SECOND RESTRICTION |
| ⋮ $T_{5N-1}$ | ⋮ | ⋮ | PAGING | | | | | | | | | |
| $T_0$ | 0 | 0 | RESTRICTION RELEASE | RESTRICTION RELEASE | | | PAGING | | | | | |
| $T_1$ | 0 | 100 | | | PAGING | | RESTRICTION START | | | | | |
| $T_2$ | 100 | 100 | | | RESTRICTION START | CONTINUE | | | | | | |
| ⋮ $T_{N-1}$ | ⋮ 100 | ⋮ 100 | | | PAGING | | | | | | | |
| $T_N$ | 0 | 0 | | | RESTRICTION RELEASE | RESTRICTION RELEASE | PAGING | | PAGING | | | |
| $T_{N+1}$ | 0 | 100 | | | | | RESTRICTION START | | RESTRICTION START | | | |
| $T_{N+2}$ | 100 | 100 | | | | | RESTRICTION START | CONTINUE | | | | |
| ⋮ $T_{2N-1}$ | ⋮ 100 | ⋮ 100 | | | | | PAGING | | | | | |
| $T_{2N}$ | 0 | 0 | | | | | RESTRICTION RELEASE | RESTRICTION RELEASE | PAGING | | PAGING | |
| $T_{2N+1}$ | 0 | 100 | | | | | | | RESTRICTION START | | RESTRICTION START | |
| $T_{2N+2}$ | 100 | 100 | | | | | | | RESTRICTION START | CONTINUE | | |
| ⋮ $T_{3N-1}$ | ⋮ 100 | ⋮ 100 | | | | | | | PAGING | | | |
| $T_{3N}$ | 0 | 0 | | PAGING | | | | | RESTRICTION RELEASE | RESTRICTION RELEASE | PAGING | |
| $T_{3N+1}$ | 0 | 100 | | RESTRICTION START | | | | | | | RESTRICTION START | CONTINUE |
| $T_{3N+2}$ | 100 | 100 | | | | | | | | | RESTRICTION START | CONTINUE |
| ⋮ $T_{4N-1}$ | ⋮ 100 | ⋮ 100 | | | | | | | | | PAGING | |
| $T_{4N}$ | 0 | 0 | | | PAGING | | | | | | RESTRICTION RELEASE | RESTRICTION RELEASE |
| $T_{4N+1}$ | 0 | 100 | PAGING | | RESTRICTION START | | | | | | | |
| $T_{4N+2}$ | 100 | 100 | RESTRICTION START | CONTINUE | | | | | | | | |
| ⋮ | ⋮ | ⋮ | | | | | | | | | | |

EP 2 750 450 A1

## INTERNATIONAL SEARCH REPORT

| | International application No. |
|---|---|
| | PCT/JP2012/068626 |

**A. CLASSIFICATION OF SUBJECT MATTER**
*H04W48/06*(2009.01)i

According to International Patent Classification (IPC) or to both national classification and IPC

**B. FIELDS SEARCHED**

Minimum documentation searched (classification system followed by classification symbols)
H04W48/06

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho   1971-2012    Toroku Jitsuyo Shinan Koho     1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-098872 A   (NTT Docomo Inc.), 24 April 2008 (24.04.2008), entire text; all drawings & US 2008/0130493 A1    & EP 1912461 A2 & CN 101163111 A        & KR 10-2008-0032619 A | 1-5 |
| A | JP 2009-049543 A  (NTT Docomo Inc.), 05 March 2009 (05.03.2009), entire text; all drawings (Family: none) | 1-5 |
| A | JP 2010-232811 A  (Nippon Systemware Co., Ltd.), 14 October 2010 (14.10.2010), entire text; all drawings (Family: none) | 1-5 |

☐  Further documents are listed in the continuation of Box C.    ☐  See patent family annex.

| | |
|---|---|
| *    Special categories of cited documents: | "T"   later document published after the international filing date or priority |
| "A"   document defining the general state of the art which is not considered to be of particular relevance | date and not in conflict with the application but cited to understand the principle or theory underlying the invention |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 10 August, 2012 (10.08.12) | 21 August, 2012 (21.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 750 450 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011182541 A

**Non-patent literature cited in the description**

- *3GPP TS36. 304 V8. 9. 0,* September 2010